## Europäisches Patentamt
## European Patent Office
## Office européen des brevets

(19)

(11) Numéro de publication: **0 004 825**
**B1**

(12)

# FASCICULE DE BREVET EUROPEEN

(45) Date de publication du fascicule de brevet:
06.01.82

(51) Int. Cl.³: **B 65 G 69/18**

(21) Numéro de dépôt: **79420016.2**

(22) Date de dépôt: **26.03.79**

(54) Dispositif en forme de cloche pour appareil de chargement de matériaux poussiéreux.

(30) Priorité: **10.04.78 FR 7811000**

(43) Date de publication de la demande:
**17.10.79 Bulletin 79/21**

(45) Mention de la délivrance du brevet:
**06.01.82 Bulletin 82/1**

(84) Etats contractants désignés:
**DE GB NL SE**

(56) Documents cités:
**FR-A-2 200 179**
**US-A-3 738 464**

(73) Titulaire: **ALUMINIUM PECHINEY, 28, rue de Bonnel, F-69433 Lyon Cedex 3 (FR)**

(72) Inventeur: **Hanrot, Jean-Pascal, 7 La Claimande La mère de Dieu Brûlée, F-13100 Aix En Provence (FR)**
Inventeur: **Voipeliere, Jacky, Allée des Genêts, Quartier Gassin F-13120 Mimet (FR)**

(74) Mandataire: **Gaucherand, Michel et al, PECHINEY UGINE KUHLMANN 28 rue de Bonnel, F-69433 Lyon Cedex 3 (FR)**

# Dispositif en forme de cloche pour appareil de chargement de matériaux poussiéreux

L'invention concerne un dispositif en forme de cloche destiné à être adapté à un appareil de chargement de matériaux pulvérulents ou granuleux, contenant de fines particules sensibles à l'envolement, qui permet, lors de l'opération de chargement, de supprimer l'envolement des poussières en les captant et en les recyclant, comportant une tubulure d'alimentation en matériaux pulvérulents ou granuleux, une enceinte de chargement rigide solidaire axialement de la tubulure d'alimentation s'ouvrant sur l'enceinte par l'intermédiaire d'une suspension flottante ainsi que d'une tubulure d'aspiration desdites particules fines.

Depuis toujours, la réalisation d'un tas de produits pulvérulents sur une surface de stockage, ou encore le remplissage d'une cale de navire au moyen d'une tubulure souple, dont l'extrémité se situe au-dessus du tas en cours de formation, provoque, en l'absence de tout dispositif de captation des fines, un nuage de poussières dense entrêment gênant pour le personnel présent.

En effet, il est bien connu que toute matière pulvérulente délivrée par une tubulure d'alimentation verticale entraîne dans sa chute un volume d'air sensiblement égal à quatre ou cinq fois celui de la matière au repos. Cet entraînement est provoqué par un effet d'aspiration dû à l'accélération par la pesanteur de la matière délivrée par la tubulure et par son frottement sur l'air. Pendant cette chute dans la canalisation, l'air, intimement lié à la matière, la fluidifie.

Ainsi, la matière pulvérulente fluidisée charge l'air ambiant en poussière en l'entraînant d'abord dans le sens de l'écoulement du produit sortant de la tubulure d'alimentation et se répandant sur la surface du tas en cours de formation, puis, en remontant en volutes après être entrée en contact avec le tas, perpétuellement renouvelée et chassée en formant un nuage opaque qui peut être extrémement conséquent.

Une protection connue contre les émissions intempestives de poussières consiste à ampêcher que le jet de matière fluidisée ait un contact avec l'air ambiant jusqu'à son impact sur le tas en cours de constitution, et à aspirer simultanément un volume d'air au moins égal au volume total d'air et de matière introduit à chaque instant.

Pour cela, un premier appareillage bien connu consiste en un tronc de cône métallique dont la petite base est solidaire de l'extrémité de la tubulure d'alimentation, tandis que la grande base est munie de pétales en caoutchouc de forme rectangulaire. La corolle ainsi formée autour du jet de matière l'empêche d'avoir un contact avec l'air ambiant et diminue ainsi la formation de volutes de poussières.

Dans un perfectionnement intéressant proposé pour limiter la formation des volutes de poussières, il a été préconisé de munir la corolle de cet appareillage d'une tubulure d'aspiration de l'air chargé en poussières.

Bien que cet appareillage apporte des améliorations importantes, il présente, cependant, certains inconvénients.

Tout d'abord, la corolle représente une masse importante provoquant une surcharge de la flèche du portique supportant la tubulure d'alimentation et auquel elle est suspendue par un ensemble de câbles. Cette surcharge entraîne l'obligation de renforcer la structure du portique, et, dès lors, d'en augmenter le coût de construction.

Mais aussi, la corolle munie de pétales est fréquemment ensevelie dans le tas en cours de formation, exigeant pour le bon fonctionnement de cet appareillage sa libération par des efforts mécaniques importants.

Enfin, la rigidité du dispositif constitué par la corolle et la tubulure nécessite un mouvement vertical continu de l'ensemble, afin que la grande base de la corolle soit tenue à proximité du tas en cours de formation, et il est bien connu que le dernier inconvénient n'a pratiquement pas encore trouvé de solution, par exemple, lors du chargement d'un bateau subissant une houle.

Mais un autre appareillage, également connu, comporte, pour l'essentiel, une colonne d'alimentation en matériaux pulvérulents et un récipient à poussière en forme de cuvette, solidaire de l'extrémité inférieure de ladite colonne. Cet appareillage suspendu à un portique est placé audessus du tas en cours de formation, de telle manière que le récipient à poussière soit très proche de celui-ci. Le matériau pulvérulent, distribué par gravité dans la tubulure d'alimentation, remplit le récipient à poussière, dans lequel il se libère de l'air mécaniquement entraîné et duquel il s'échappe par débordement. Ce dispositif a pour effet de diminuer la vitesse de la chute de la matière à l'air libre et, dès lors, la formation des volutes de poussières. Cet appareillage révèle des inconvénients qui rendent son usage limité aux produits pulvérulents et une mauvaise adaptation aux produits granuleux. Il est également très lourd nécessitant, pour le supporter, un portique renforcé.

D'autres technologies ont également été proposées dans la littérature spécialisée pour permettre la manutention en vrac de matériaux pulvérulents ou granuleux, en vue de limiter la formation de nuages de poussières accompagnant généralement cette opération.

C'est ainsi qu'une telle technologie est décrite dans le brevet français 2 200 179 qui comporte une tubulure télescopique d'alimentation par gravité en matériaux pulvérulents, une plaque de base circulaire comportant une ouverture centrale, et des perforations périphériques, cette plaque étant solidaire et coaxiale avec l'extrémité inférieure du tube télescopique d'alimentation, une jupe souple et évasée montée sur la plaque de base se prolongeant vers le bas et destinée à recouvrir le tas de matière formé, enfin une enveloppe tubulaire coaxiale fixée par son extrémité inférieure à la plaque de base formant un espace annulaire par lequel s'échappe l'air et la poussière provenant du dessous de la plaque de base en migrant à travers les perforations périphériques de celle-ci.

C'est aussi le cas de cette autre technologie décrite dans l'USA 3 738 464 qui comporte une tubulure d'alimentation à »soufflets«, flexible et rétractable, par laquelle sont distribués par gravité les matériaux pulvérulents, une jupe souple et évasée, coaxiale et solidaire de la tubulure à soufflets se prolongeant vers le bas, afin de couvrir le tas de matériaux en cours de formation, des moyens de contrôle de fonctionnement, enfin des moyens pour assurer la remontée de la tubulure à soufflets au fur et à mesure que se forme le tas de matériaux pulvérulents.

Ces deux appareils présentent les mêmes inconvénients que ceux précédemment énumérés, mais plus particulièrement l'inconvénient d'être inexploitable pour le chargement d'un bateau subissant une houle.

Dès lors qu'une protection efficace contre les émissions intempestives des poussières au moment du chargement de matériaux pulvérulents ou granuleux n'était pas encore trouvé, et dès lors que le problème restait imparfaitement solutionné depuis de nombreuses années, la demanderesse, poursuivant ses recherches en ce domaine, a trouvé et mis au point un nouveau dispositif en forme de cloche destiné à être adapté à un appareil de chargement de ces matériaux, permettant d'apporter une solution vraie et efficace aux difficultés rencontrées par l'homme de métier.

Le dispositif en forme de cloche pour appareil de chargement de matériaux pulvérulents ou granuleux contenant également des particules fines sensibles à l'envolement, permettant de supprimer ledit envolement pendant la formation d'un de matériaux, en captant les poussières et en les recyclant, comportant une tubulure d'alimentation en matériaux pulvérulents ou granuleux, une enceinte de chargement rigide solidaire axialement de la tubulure d'alimentation, s'ouvrant sur l'enceinte par l'intermédiaire d'une suspension flottante, ainsi que d'une tubulure d'aspiration desdites particules fines reliée d'une part à l'enceinte de chargement et d'autre part à un système de dépoussiérage, caractérisé en ce que, afin que ledit appareil puisse flotter sur la surface du tas en cours de formation, il comprend du bas vers le haut:

a) l'enceinte de chargement cylindrique, troncpyramidale ou tronconique, c'est-à-dire le cas échéant de grande base disposée en aval de la petite base dans le sens de chargement des matériaux, ladite enceinte comportant au moins deux couronnes polygonales ou toriques constituées par des boudins gonflables situés dans des plans différents, des entretoises rigidifiantes entre les boudins ainsi qu'une jupe souple disposée selon la surface latérale de la structure gonflée.

b) une hotte souple de liaison surmontant d'une manière étanche l'enceinte gonflable de chargement

c) un manchon de liaison placé entre la hotte souple et la tubulure d'alimentation en matériaux.

L'enceinte pyramidale à structure gonflable constitue une cloche semi-rigide, comportant au moins deux boudins gonflables situés dans deux plans différents et distants l'un de l'autre. Ces boudins sont dans la majorité des cas dans des plans parallèles, mais peuvent être situés également, et selon des cas particuliers précis, dans des plans concourants.

Ces boudins gonflables sont en général situés dans deux plans horizontaux, mais il n'est pas exclu qu'ils puissent se trouver dans des plans obliques.

De même, et d'une manière générale, quand les boudins gonflables sont dans des plans parallèles, ils sont coaxiaux, mais, pour des applications plus particulières, il a été vérifié que leurs axes pouvaient être différents.

Les boudins constituent des couronnes de forme circulaire torique, ou encore de forme polygonale dont les périmètres généralement différents peuvent être, dans certains cas, identiques.

Pour que l'enceinte pyramidale légère et gonflable ait une certaine rigidité verticale, les boudins précités sont reliés entre eux par des entretoises rigidifiantes qui peuvent elles-mêmes être des boudins gonflables, ou bien réalisées en des matériaux métalliques, tels que l'aluminium, l'acier, des matériaux polymères, armés ou non, tels que polyamide, polyéthylène, polypropylène, polyester, ou encore en matériaux naturels tels que le bois.

Ainsi, les boudins reliés entre eux par les entretoises constituent une structure semi-rigide et légère, fermée par une jupe souple qui peut être en textile, emprisonnant les volutes de poussières.

Afin de faciliter l'évacuation des volutes de poussières formées dans l'enceinte de chargement, il peut être intéressant de disposer sur la périphérie de la jupe des ouïes de prélèvement de l'air externe qui, ensuite, entraîne les poussières dans la tubulure d'aspiration reliée à un dispositif de dépoussiérage.

La hotte souple de liaison, généralement réalisée en textile, est de forme tronconique ou tronc pyramidale selon la propre forme de l'enceinte de chargement. Cette hotte joue un rôle fondamental dans le dispositif selon l'invention, car elle permet à l'enceinte gonflable de chargement de flotter sur le tas en cours de formation, en absorbant tous les déplacements relatifs verticaux et angulaires entre la tubulure de chargement et l'enceinte gonflable de chargement.

Le manchon, pièce de liaison entre la hotte souple et la tubulure de chargement, peut être réalisé en un matériau rigide ou souple. Il peut aussi recevoir des accessoires divers tels que tubulure d'aspiration latérale ou encore coaxiale à la tubulure d'alimentation, des prises d'échantillons, une ou des détections de niveaux.

Par rapport à l'état de la technique, le dispositif selon l'invention offre une grande légèreté, qui permet une manutention aisée, qu'il soit ou non gonflé qui n'impose qu'une faible charge à l'élément porteur, qui, de ce fait, peut avoir une structure très allégée, et, comme cela a déjà été exprimé, qui flotte véritablement sur le tas en cours de formation, sans être enfoui dans le matériau.

De plus, comme le dispositif selon l'invention est gonflable, sa souplesse peut être réglée selon un choix judicieux de telle manière que sa base épouse la forme du tas; mais cela lui permet également, par dégonflage, un démontage et un rangement faciles, une faible prise au vent, mais surtout de l'introduire dans des capacités à remplir disposant d'une ouverture à faible section.

Le dispositif selon l'invention sera mieux compris grâce à la description chiffrée des figures annexées qui en illustrent un cas particulier.

La figure n° I représente une vue de face du dispositif de chargement selon l'invention.

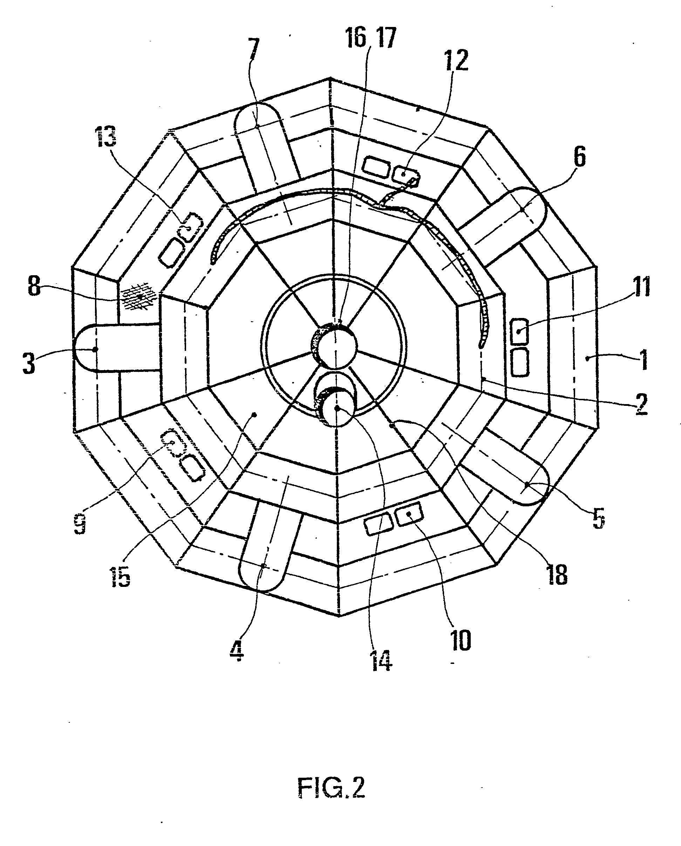

La figure n° 2 représente une vue en plan du dispositif de chargement selon l'invention

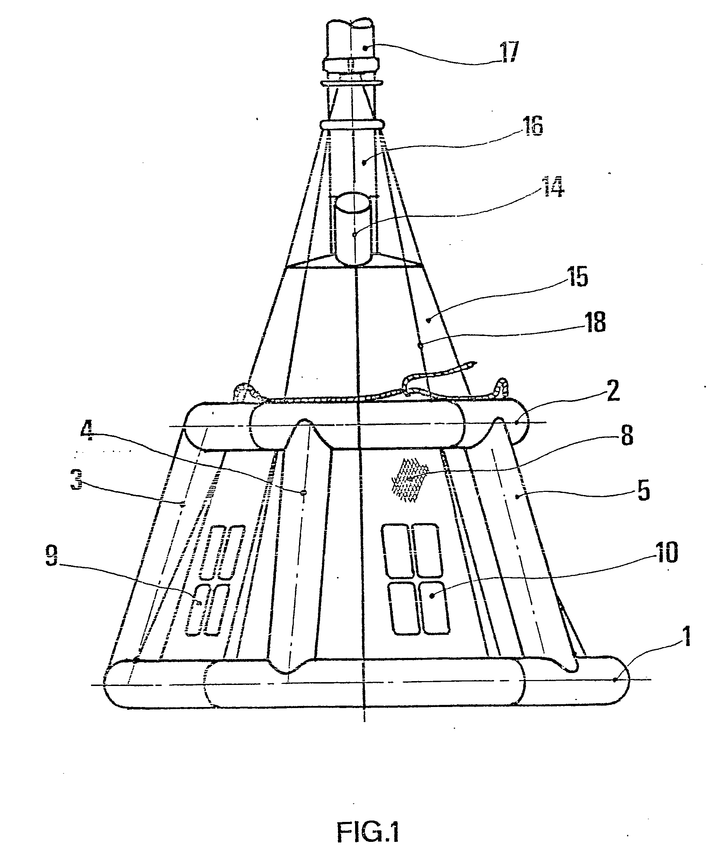

Selon les figures 1 et 2, le dispositif en forme de cloche pour le chargement de matériaux pulvérulents ou granuleux contenant de fines particules sensibles à l'envolement se compose, du bas vers le haut:

— d'une enceinte troncpyramidale ou tronconique, dont la grande base est disposée en aval de la petite base dans le sens du chargement des matériaux, comportant d'abord deux couronnes (1) et (2) coaxiales polygonales, constituées par des boudins gonflables situés dans deux plans parallèles et horizontaux, ces deux couronnes (1) et (2) étant reliées entre elles par des entretoises (3), (4), (5), (6) et (7) rigidifiantes par gonflage, puis une jupe (8) souple disposée selon la surface latérale de la structure gonflée créée par lesdites couronnes et entretoises,

— d'ouies (9), (10), (11), (12) et (13) se trouvant sur la périphérie de la jupe (8), permettant le prélèvement d'air externe,

— d'une hotte souple (15), généralement de forme troncpyramidale ou tronconique selon la forme de l'enceinte de chargement surmontant cette dernieère d'une manière étanche, et reliée coaxialement à une tubulure (17) d'alimentation en matériaux pulvérulents et granuleux,

— d'un manchon de liaison (16) placé entre la hotte souple (15) et la tubulure (17) d'alimentation,

— d'une tubulure (14) d'aspiration des particules fines, reliée d'une part à l'enceinte de chargement et d'autre part à un système de dépoussiérage non représenté, en captant l'air externe introduit dans ladite enceinte au moyen des ouïes (9), (10), (11), (12) et (13).

Réalisée en textile, la hotte joue un rôle très important dans le dispositif selon l'invention quisqu'elle absorbe tous les mouvements (de houle par exemple), tout en laissant l'enceinte gonflable flotter à la surface du tas en cours de formation.

Enfin, le dispositif comporte un ensemble de câbles (18) de suspension qui laisse toute sa souplesse à la hotte (15) et qui permet de manoeuvrer la structure avant ou après usage sans qu'il y ait risque de détérioration pour la hotte et pour la jupe par tensions excessives.

## Revendications

1. Dispositif en forme de cloche pour appareil de chargement de matériaux pulvérulents ou granuleux contenant également des particules fines sensibles à l'envolement, permettant de supprimer ledit envolement pendant la formation d'un tas de matériaux, en captant les poussières et en les recyclant, comportant une tubulure (17) d'alimentation en matériaux pulvérulents ou granuleux, une enceinte de chargement rigide solidaire axialement de la tubulure (17) d'alimentation s'ouvrant sur l'enceinte par l'intermédiaire d'une suspension flottante, ainsi que d'une tubulure (14) d'aspiration desdites particules fines reliée d'une part à l'enceinte de chargement et d'autre part à un système de dépoussiérage, caractérisé en ce que, afin que ledit appareil puisse flotter sur la surface du tas en cours de formation, il comprend du bas vers le haut:

a) l'enceinte de chargement cylindrique, troncpyramidale ou tronconique, c'est-à-dire le cas échéant de grande base disposée en aval de la petite base dans le sens de chargement des matériaux, ladite enceinte comportant au moins deux couronnes (1) et (2) polygonales ou toriques constituées par des boudins gonflables situés dans des plans différents, des entretoises (3), (4), (5), (6), (7) rigidifiantes entre les boudins ainsi qu'une jupe (8) souple disposée selon la surface latérale de la structure gonflée.

b) une hotte souple (15) de liaison surmontant d'une manière étanche l'enceinte gonflable de chargement,

c) un manchon de liaison (16) placé entre la hotte souple (15) et la tubulure (17) d'alimentation en matériaux.

2. Dispositif de chargement selon la revendication 1, caractérisé en ce que les couronnes (1) et (2) sont dans des plans parallèles.

3. Dispositif de chargement selon la revendication 2, caractérisé en ce que les couronnes (1) et (2) sont dans des plans horizontaux.

4. Dispositif de chargement selon les revendications 2 et 3, caractérisé en ce que les axes des couronnes (1) et (2) sont coaxiaux.

5. Dispositif de chargement selon la revendication 1, caractérisé en ce que les couronnes sont dans des plans concourants.

6. Dispositif de chargement selon la revendication 1, caractérisé en ce que les entretoises (3), (4), (5), (6), (7) rigidifiantes sont des boudins gonflables.

7. Dispositif de chargement selon la revendication 1, caractérisé en ce que les entretoises (3), (4), (5), (6), (7) regidifiantes sont réalisées en des matériaux métalliques, en matériaux polymères éventuellement armés, d'origine synthétique tels que les polyamides, polyéthylènes, polypropylènes, polyesters, ou d'origine naturelle tels que le bois.

8. Dispositif de chargement selon la revendication 1, caractérisé en ce que la jupe (8) textile comporte des ouïes (9), (10), (11), (12), (13) d'entrée d'air.

9. Dispositif de chargement selon la revendication 1, caractérisé en ce qu'il comporte des câbles (18) de suspension permettant de le manipuler avant ou après usage sans réaliser des tensions sur la jupe (8) et la hotte.

## Patentansprüche

1. Vorrichtung in Glockenform für Anlage zum Laden von pulverförmigen oder körnigen, auch zum Wegfliegen neigende feine Teilchen enthaltenden Materialien, die es ermöglicht, das Wegfliegen während der Bildung eines Materialhaufens zu unterdrücken, indem die Stäube erfaßt und rückgeführt werden, und die ein Rohr (17) zum Zuführen von pulverförmigen oder körnigen Materialien, einen starren, axial fest mit dem Zuführungsrohr (17) verbundenen Ladebehälter, welches Rohr sich am Behälter mittels einer schwimmenden Aufhängung öffnet, sowie ein Rohr (14) zum Ansaugen der feinen Teilchen aufweist, das einerseits mit dem Ladebehälter und andererseits mit einem Entstaubungssystem verbunden ist, dadurch gekennzeichnet, daß, damit die Anlage auf der Oberfläche des Haufens im Bildungsverlauf schwimmen kann, von unten nach oben aufweist:

a) den zylindrischen, pyramidenstumpf- oder kegelstumpfförmigen, d. h. ggf. mit stromab der kleinen Basis in der Laderichtung der Materialien angeordneter großer Basis versehenen Ladebehälter, der wenigstens zwei polygonale oder ringförmige Kränze (1) und (2), die aus in verschiedenen Ebenen liegenden, aufblasbaren Wülsten gebildet sind, versteifende Streben (3), (4), (5), (6), (7) zwischen den Wülsten sowie einen längs der Seitenfläche des aufgeblasenen Gebildes angeordneten Bundring (8) aufweist,

b) eine den aufblasbaren Ladebehälter in dichter Weise überragende schmiegsame Verbindungshaube (15),

c) eine zwischen der schmiegsamen Haube (15) und dem Materialzuführungsrohr (17) angeordnete Verbindungsbuchse.

2. Ladevorrichtung nach Anspruch 1, dadurch gekennzeichnet, daß die Kränze (1) und (2) in parallelen Ebenen sind.

3. Ladevorrichtung nach Anspruch 2, dadurch gekennzeichnet, daß die Kränze (1) und (2) in horizontalen Ebenen sind.

4. Ladevorrichtung nach den Ansprüchen 2 und 3, dadurch gekennzeichnet, daß die Achsen der Kränze (1) und (2) koaxial sind.

5. Ladevorrichtung nach Anspruch 1, dadurch gekennzeichnet, daß die Kränze in sich schneidenden Ebenen sind.

6. Ladevorrichtung nach Anspruch 1, dadurch gekennzeichnet, daß die versteifenden Streben (3), (4), (5), (6), (7) aufblasbare Wülste sind.

7. Ladevorrichtung nach Anspruch 1, dadurch gekennzeichnet, daß die versteifenden Streben (3), (4), (5), (6), (7) aus metallischen Materialien, ggf. verstärkten Polymermaterialien synthetischen Ursprungs, wie den Polyamiden, Polyäthylenen, Polypropylenen, Polyestern oder natürlichen Ursprungs, wie Holz, hergestellt sind.

8. Ladevorrichtung nach Anspruch 1, dadurch gekennzeichnet, daß der Textilbundring (8) Lufteinlaßlöcher (9), (10), (11), (12), (13) aufweist.

9. Ladevorrichtung nach Anspruch 1, dadurch gekennzeichnet, daß sie Aufhängekabel (18) aufweist, die ihre Handhabung vor oder nach Gebrauch ohne Erzeugung von Spannungen am Bundring (8) und an der Haube ermöglichen.

## Claims

1. A bell-shaped construction for an apparatus for loading powder-form or granular materials also containing particles so light as to be capable of floating on air, enabling said floating to be suppressed during the formation of a pile of materials by capturing the dust-like particles and recycling them, comprising a feed tube (17) for powder-form or granular materials, a rigid loading chamber axially integral with the feed tube (17) opening into said chamber through a floating suspension, and a suction tube (14) for said light particles connected on the one hand to the loading chamber and on the other hand to a dust-extraction system, characterised in that, to enable the apparatus to float on the surface of the pile during its formation, it comprises from the bottom to the top:

a) the cylindrical, frusto-pyrimidal or frusto-conical loading chamber, i.e. with its major base situated if necessary downstream of the minor base in the direction in which the materials are loaded, said chamber comprising at least two rings (1) and (2) polygonal or annular in shape and formed by inflatable collars situated in different planes, strengthening cross-members (3), (4), (5), (6), (7) between the collars and a skirt (8) made of flexible material and arranged along the lateral surface of the inflated structure,

b) a flexible connecting hood (15) surmounting the inflatable loading chamber in fluid-tight manner,

c) a connecting sleeve (16) situated between the flexible hood (15) and the feed tube (17) for the materials.

2. A loading apparatus as claimed in Claim 1, characterised in that the rings (1) and (2) are in parallel planes.

3. A loading apparatus as claimed in Claim 2, characterised in that the rings (1) and (2) are in horizontal planes.

4. A loading apparatus as claimed in Claims 2 and 3, characterised in that the axes of the rings (1) and (2) are coaxial.

5. A loading apparatus as claimed in Claim 1, characterised in that the rings are in converging planes.

6. A loading apparatus as claimed in Claim 1, characterised in that the strengthening cross-members (3), (4), (5), (6), (7) are inflatable collars.

7. A loading apparatus as claimed in Claim 1, characterised in that the strengthening cross-members (3), (4), (5), (6), (7) are made of metals, optionally reinforced polymeric materials of synthetic origin, such as polyamides, polyethylenes, polypropylenes, polyester, or of natural origin such as wood.

8. A loading apparatus as claimed in Claim 1, characterised in that the textile skirt (8) comprises air intake inlets (9), (10), (11), (12), (13).

9. A loading apparatus as claimed in Claim 1, characterised in that it comprises suspension cables (18) enabling it to be handled before or after use without subjecting either the skirt (8) or the hood to tension.

FIG.1

FIG.2